# DEMANDE DE BREVET EUROPEEN

(11) **EP 4 567 291 A1**
(43) Date de publication de la demande: **11.06.2025**
(21) Numéro de dépôt: 24215844.2
(22) Date de dépôt: 27.11.2024
(51) Int. Cl.: F16C 19/38, F16C 19/54, F16C 33/54, F16C 33/34

(54) **PALIER DE GUIDAGE EN ROTATION COMPORTANT AU MOINS UN ENSEMBLE DE CAGE A ROULEAUX**

(30) Priorité: 07.12.2023 FR 2313727
(71) Demandeur: Defontaine, 85530 La Bruffière (FR); thyssenkrupp AG, 45143 Essen (DE)
(72) Inventeur: DEUDE, Olivier, 44190 Clisson (FR); JACQUEMONT, Eric, 44190 Clisson (FR); GUERIN, Bertrand, 49660 Sèvremoine (FR)
(74) Mandataire: Novagraaf Technologies

(57) **Abrégé**

La présente invention a pour objet un ensemble (200S) de cage à rouleaux pour le guidage en rotation d'une première bague de roulement par rapport à une seconde bague de roulement et comportant une série de rouleaux (RS) ayant chacun un axe individuel de rotation (AS) et une cage (10S) de guidage et de positionnement des rouleaux (RS), dans lequel la cage (10 S) comporte au moins un anneau ou segment d'anneau (12SA, 12SB) qui comporte une série de doigts (14 SA, 14 SB) répartis circonférentiellement dont chacun est reçu à l'intérieur d'un trou axial d'un rouleau (RS) associé, caractérisé en ce que l'anneau ou segment d'anneau (12SA, 12SB) et la série de doigts (14SA, 14SB) sont réalisés en une seule pièce.

L'invention propose aussi un palier intégrant au moins un ensemble de cage à rouleaux.

## Description

### Domaine technique de l'invention

L'invention concerne un ensemble de cage à rouleaux pour le guidage en rotation, autour d'un axe principal de rotation, d'une première bague de roulement par rapport à une seconde bague de roulement.

L'invention concerne aussi un palier de guidage en rotation apte à être interposé entre deux éléments d'une structure qui sont montés tournants l'un par rapport à l'autre.

### Arrière-plan technique

L'invention concerne un ensemble de cage à rouleaux pour le guidage en rotation, autour d'un axe principal de rotation, d'une première bague de roulement par rapport à une seconde bague de roulement, cet ensemble comportant :
- une série de rouleaux ayant chacun un axe individuel de rotation et qui sont répartis circonférentiellement autour de l'axe principal ; et
- et une cage de guidage et de positionnement circonférentiel des rouleaux.

A titre d'exemple, une ou plusieurs cages peuvent être intégrées à un palier de guidage en rotation, ou roulement.

Des exemples d'intégration de trois cages à rouleaux sont par exemple illustrés dans les documents FR2072552 et EP2503164B1.

Le guidage des rouleaux est très important afin d'éviter tout contact entre les rouleaux, ce qui entraînerait leur usure et leur défaillance prématurée, et pour maintenir l'axe de rotation de chacun des rouleaux dans la position optimale, afin d'éviter une augmentation du couple et une défaillance prématurée.

Un premier problème de ce guidage standard est que le nombre de rouleaux est limité par l'épaisseur de la paroi de la cage entre les rouleaux adjacents.

De manière connue, on peut faire appel à des cages, ou à des segments de cages dans lesquelles la cage comporte une série de fenêtres dans chacune desquelles un rouleau est agencé avec jeu.

L'écart angulaire ou circonférentiel entre les rouleaux doit être suffisamment grand pour maintenir une résistance suffisante de la paroi de la cage entre les rouleaux d'un même secteur, et entre les rouleaux de deux secteurs voisins.

L'espace entre les segments de cage doit aussi être suffisant pour éviter les blocages en raison de la dilatation sous l'effet de la chaleur notamment.

Cela limite le nombre de rouleaux et donc la capacité de charge du roulement.

Un deuxième problème est que le guidage standard à partir du diamètre extérieur des rouleaux conduit à enlever le lubrifiant sur le diamètre extérieur du rouleau, et limite ainsi la quantité de lubrifiant présent au niveau des surfaces de contact entre les rouleaux et les chemins ou pistes de roulement.

Cela peut provoquer une usure prématurée en cours de fonctionnement.

Un troisième problème est que les cages de conception classique ont un volume important et que, la plupart du temps, il y a un contact entre les cages et les chemins de roulement, ce qui limite la circulation du lubrifiant à l'intérieur du roulement et empêche ainsi une lubrification uniforme du roulement.

Une des solutions connues consiste à guider les rouleaux en faisant appel à une conception selon laquelle la cage comporte au moins un anneau qui comporte une série de doigts répartis circonférentiellement dont chacun est reçu à l'intérieur d'un trou axial d'un rouleau associé.

Un exemple d'une telle conception est illustré dans le document EP2172664A1. Cette conception faisant appel à la réalisation de tels doigts sous forme de broches vissées dans deux anneaux complémentaires est complexe, coûteuse, lourde et difficile à assembler et à intégrer dans des structures de palier.

D'autres exemples d'ensembles de cage à rouleaux sont décrits et représentés dans les documents US5256495A1, DE102018117839, JP2002-372053A, JP2007-205557A1A, et US3652141A.

D'une manière générale, il est aussi souhaitable de pouvoir réduire le poids et le coût de fabrication des rouleaux et des cages.

### Résumé de l'invention

L'invention propose un palier de guidage en rotation, autour d'un axe principal de rotation, apte à être interposé entre deux éléments d'une structure qui sont montés tournants l'un par rapport à l'autre, ce palier comportant :
- une première bague de roulement, radialement intérieure, réalisée en une ou plusieurs parties ;
- une seconde bague de roulement coaxiale, radialement extérieure, réalisée en une ou plusieurs parties, s'étendant autour de la première bague de roulement ;
- et trois ensembles de cage à rouleaux pour le guidage en rotation de la première bague de roulement par rapport à la seconde bague de roulement,
caractérisé :
- en ce que chaque dit ensemble comporte :
   - - une série de rouleaux ayant chacun un axe individuel de rotation et qui sont répartis circonférentiellement autour dudit axe principal ;
   - - et une cage de guidage et de positionnement circonférentiel des rouleaux autour dudit axe principal,
   - et en ce que ladite cage de chaque dit ensemble comporte au moins un anneau ou segment d'anneau :
   - - qui comporte une série de doigts répartis circonférentiellement dont chacun est reçu à l'intérieur d'un trou axial d'un rouleau associé ;
   - - qui, avec la série de doigts associés, sont réalisés en une seule pièce.

Selon d'autres caractéristiques de l'invention :
- chaque cage comporte deux anneaux ou segments d'anneaux complémentaires dont chacun comporte une série de doigts, réalisés en une seule pièce avec l'anneau ou segment d'anneau, qui sont répartis circonférentiellement et dont chacun est reçu à l'intérieur d'un trou axial d'un rouleau associé ; et chaque rouleau, à au moins une de ses deux extrémités axiales opposées, comporte un trou axial qui reçoit un doigt d'un des deux anneaux ou segments d'anneaux complémentaires ;
- le palier comporte deux ensembles de cage à rouleaux pour le guidage en rotation de la première bague de roulement par rapport à la seconde bague de roulement, et pour chacun desdits deux ensembles, l'axe individuel de rotation de chaque rouleau est orthogonal audit axe principal de rotation ;
- le palier comporte un ensemble de cage à rouleaux pour le guidage en rotation de la première bague de roulement par rapport à la seconde bague de roulement dont l'axe individuel de rotation de chaque rouleau est parallèle audit axe principal de rotation ;
- lesdits deux ensembles comportent un ensemble supérieur de cage à rouleaux qui est interposé axialement entre des pistes annulaires planes et parallèles de roulement et un ensemble inférieur de cage à rouleaux est interposé axialement ente des pistes annulaires et parallèles ; et ledit un ensemble de cage à rouleaux est un ensemble central de cage à rouleaux qui est interposé radialement entre des pistes cylindriques et parallèles de roulement ;
- chaque anneau ou segment d'anneau avec ses doigts associés est en forme d'une feuille, plane ou cintrée ;
- chaque anneau ou segment d'anneau avec ses doigts associés est réalisé par découpe, notamment par découpe au laser, dans une feuille en métal ;
- à au moins une de ses deux extrémités opposées, chaque rouleau comporte un trou axial borgne qui est apte à recevoir un doigt ;
- chaque rouleau comporte un trou axial traversant dont chaque extrémité axiale est apte à recevoir un doigt ;
- chaque rouleau est réalisé par découpe d'un tronçon de tube ;
- les deux anneaux ou segments d'anneaux complémentaires de la cage sont solidaires l'un de l'autre ;
- les deux anneaux ou segments d'anneaux de la cage sont indépendants l'un de l'autre ;
- les tronçons d'extrémité libre de deux doigts alignés et opposés reçus à l'intérieur d'un même rouleau se chevauchent axialement ;
- chaque cage s'étend selon un secteur angulaire déterminé et/ou est constituée de plusieurs secteurs angulaires indépendants ;
- l'une des deux bagues de roulement comporte un logement ouvert radialement par rapport à l'axe principal de rotation ; et l'autre des deux bagues de roulement comporte une partie en saillie qui s'étend radialement à l'intérieur dudit logement ; et chacun desdits deux ensembles pour le guidage en rotation de la première bague de roulement par rapport à la seconde bague de roulement est interposé axialement entre deux pistes annulaires opposées de roulement appartenant respectivement à ladite partie en saillie et audit logement ;
- ladite partie en saillie s'étend radialement à l'opposé de l'axe principal de rotation à partir de la première bague de roulement radialement intérieure ;
- ladite partie en saillie s'étend radialement vers l'axe principal de rotation à partir de la seconde bague de roulement radialement extérieure.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en coupe par un plan axial d'un assemblage comportant un palier de guidage intégrant trois ensembles de cage à rouleaux ;

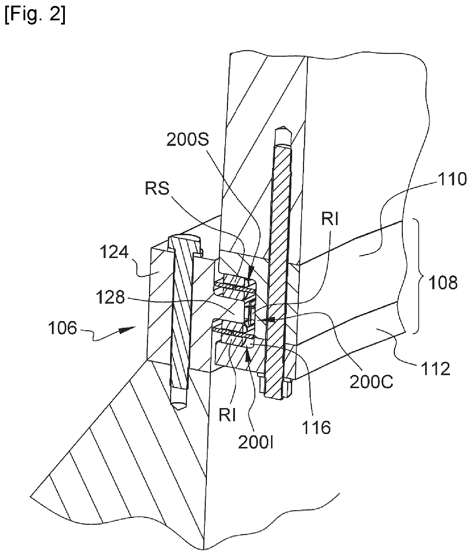

[Fig.2] - la figure 2 est une vue partielle en coupe et en perspective de l'assemblage de la figure 1 ;
[Fig.3] - la figure 3 est une vue partielle en coupe et en perspective analogue à celle de la figure 2 sur laquelle seuls les trois ensembles de cage à rouleaux sont représentés ;
[Fig.4] - la figure 4 est une vue de détail en perspective éclaté d'un tronçon de l'ensemble central de cage à rouleaux ;
[Fig.5] - la figure 5 est une vue en perspective d'un tronçon de l'un des deux ensembles supérieur ou inférieur de cage à rouleaux ;
[Fig.6] - la figure 6 est une vue en perspective éclatée du tronçon illustré à la figure 4 ;
[Fig.7] - la figure 7 est une vue en coupe par le plan 7-7 de la figure 5 ;
[Fig.8] - la figure 8 est une vue analogue à celle de la figure 5 illustrant une variante de réalisation de la cage illustrée aux figures 5 à 7.

### Description détaillée de l'invention

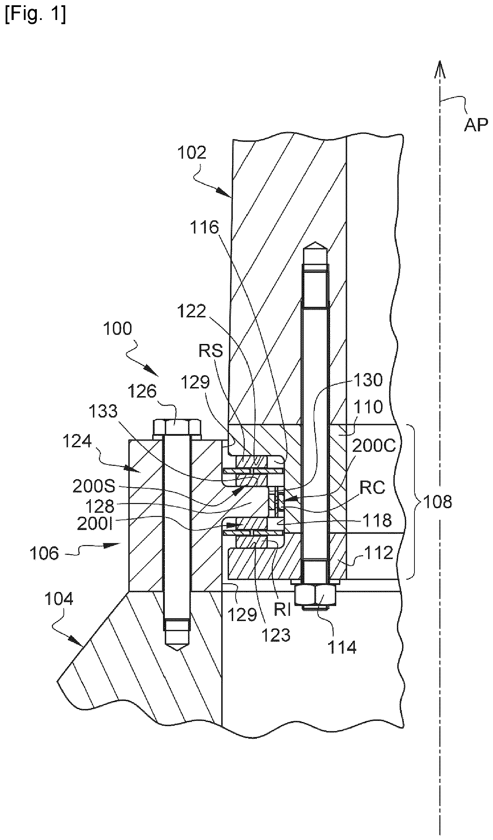

Pour la description de l'invention et la compréhension des revendications, on adoptera à titre non limitatif et sans référence limitative à la gravité terrestre l'orientation verticale selon l'orientation de l'axe principal de rotation AP indiqué à la figure 1.

Dans la description qui va suivre, des éléments identiques, similaires ou analogues seront désignés par les mêmes chiffres de référence ou par des chiffres de références analogues et indicés.

A la figure 1, en coupe par un plan axial passant par un axe principal de rotation AP, on a représenté un assemblage 100 comportant une couronne ou palier 106 de guidage en rotation d'un composant supérieur 102 par rapport à un composant inférieur 104.

Les deux composants 102 et 104 sont par exemple l'extrémité inférieure d'une pale d'éolienne assemblée de manière pivotante sur un moyeu de rotor 104.

Le palier 106 comporte une première bague de roulement 108 - radialement intérieure par rapport à l'axe principal AP - en deux parties supérieure 110 et inférieure - sur laquelle est fixé le composant 102.

L'assemblage des trois composants 102, 110 et 112 est réalisé au moyen d'un ensemble de boulons axiaux 114 répartis circonférentiellement autour de l'axe principal AP.

La première bague de roulement 108 comporte un logement 116 qui est ouvert radialement, ici vers l'extérieur, par rapport à l'axe principal de rotation.

Le logement 116 de la bague de roulement 108 est formé en partie dans la partie inférieure 112 et en partie dans la partie supérieure 110 et il est délimité verticalement par deux faces annulaires planes et opposées orthogonales à l'axe principal AP, dont une face supérieure 122 et une face inférieure 123.

Chaque face annulaire plane 122, 123 constitue une piste annulaire plane de roulement appartenant à la première bague de roulement 108.

Le logement 116 est aussi délimité, radialement vers l'intérieur par une face cylindrique convexe d'orientation axiale 118.

La face 118 constitue une piste cylindrique de roulement appartenant à la première bague de roulement 108.

Le palier 106 comporte une seconde bague de roulement 124 - radialement extérieure par rapport à l'axe principal AP - en une seule partie sur laquelle est fixé le composant 104. L'assemblage des deux composants 104 et 124 est réalisé au moyen d'un ensemble de boulons axiaux 126 répartis circonférentiellement autour de l'axe principal AP.

La seconde bague de roulement 124 comporte une partie en saillie 128 qui s'étend ici radialement vers l'axe principal AP à l'intérieur du logement 116 de la première bague de roulement 108.

La partie en saillie, ou nez, 128 est délimitée verticalement par deux faces annulaires planes et opposées orthogonales à l'axe principal AP, dont une face supérieure 132 et une face inférieure 133.

Chaque face annulaire plane 132, 133 constitue une piste annulaire plane de roulement appartenant à la seconde bague de roulement 124.

La partie en saillie 128 est aussi délimitée, radialement vers l'intérieur par une face cylindrique concave d'orientation axiale 130.

La face 130 constitue une piste cylindrique de roulement appartenant à la seconde bague de roulement 124.

La partie en saillie 128 s'étend radialement vers l'intérieur à partir d'une surface cylindrique axiale concave 129 du corps de la seconde bague de roulement 124.

Un ensemble supérieur 200S de cage à rouleaux est interposé axialement entre les pistes annulaires planes et parallèles 122 et 132 de roulement, tandis qu'un ensemble inférieur 200I de cage à rouleaux est interposé axialement ente les pistes annulaires et opposées 123 et 133.

Les axes de rotation AS et AI des rouleaux des deux ensembles de cage à rouleaux 200S et 200I sont orthogonaux à l'axe principal de rotation AP.

Les deux ensembles de cage à rouleaux 200S et 200I du palier 106 sont aptes à supporter des charges axiales orientées parallèlement à l'axe principal AP.

A titre non limitatif, la conception des deux ensembles de cage à rouleaux 200S et 200I du palier 106 est ici identique.

Un ensemble central 200C de cage à rouleaux est interposé radialement entre les pistes cylindriques et parallèles de roulement 118 et 130.

Les axes de rotation des rouleaux de l'ensemble central de cage à rouleaux 200C sont parallèles à l'axe principal de rotation AP.

L'ensemble central 200C de cage à rouleaux est apte à supporter des charges radiales orientées orthogonalement à l'axe principal AP.

De façon traditionnelle, chaque série de rouleaux appartenant à une cage à rouleaux 200S, 200I ou 200C est arrangée en cercle angulairement autour d l'axe principal AP.

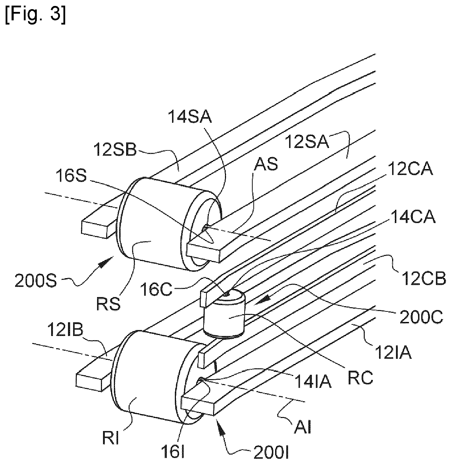

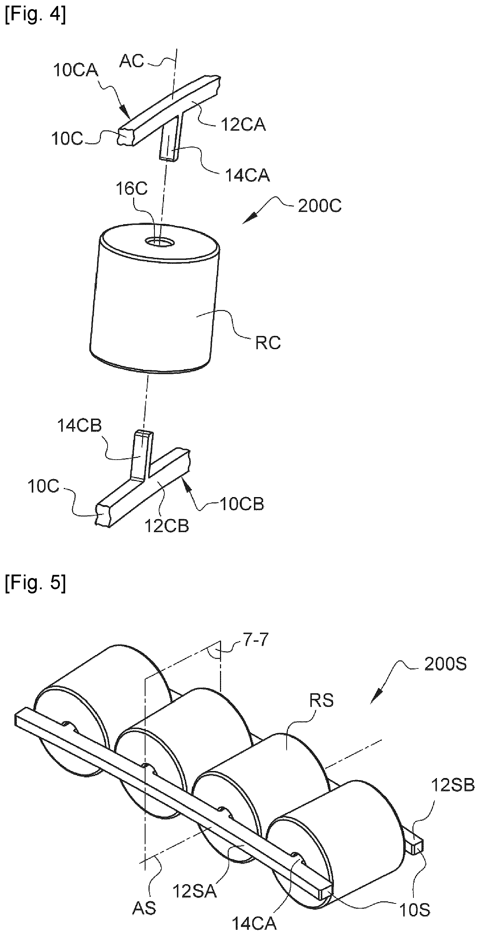

En référence notamment aux figures 3 et 4, on décrira maintenant l'exemple de conception de l'ensemble central 200C de cage à rouleaux.

L'ensemble 200C comporte une série de rouleaux RC ayant chacun un axe individuel de rotation AC et qui sont répartis circonférentiellement autour de l'axe principal AP.

Pour guider et positionner les rouleaux RC, l'ensemble 200C comporte ici une cage 10C , de guidage et de positionnement circonférentiel des rouleaux RC, en deux parties complémentaires 10CA et 10CB (Voir figure 4) dont chacune comporte un anneau 12CA, 12CB.

Chaque anneau 12CA, 12CB comporte une série de doigts 14CA, 14CB qui sont répartis circonférentiellement le long de l'anneau 12CA, 12CB.

Chaque anneau, ou secteur d'anneau ,12CA, 12CB est réalisé en une seule pièce avec sa série de doigts associés.

A titre non limitatif, chaque anneau 12CA, 12CB est en forme d'une feuille ou plaque qui est ici cintrée pour adopter une conformation globalement cylindrique.

A titre non limitatif, chaque rouleau RC comporte un trou axial traversant 16C qui débouche aux deux extrémités axiales opposées du rouleau RC.

Chaque doigt 14CA, 14CB est reçu à l'intérieur d'un trou axial 16C d'un rouleau RC associé.

La conception de chacun des deux ensembles de cage à rouleaux supérieur 200S et 200I est ici identique.

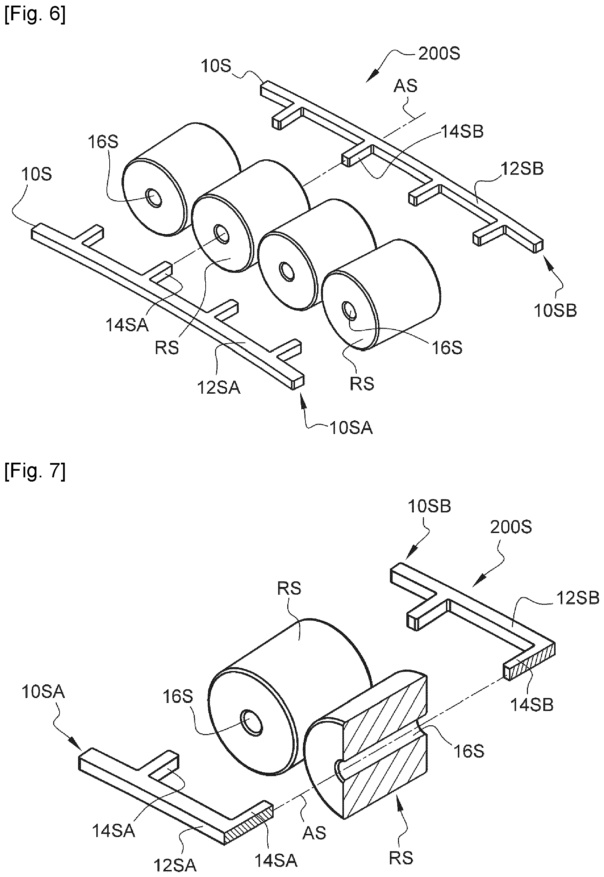

En référence notamment aux figures 3, et 5 à 7, on décrira maintenant plus en détail l'exemple de conception de l'ensemble supérieur 200S de cage à rouleaux.

L'ensemble 200S comporte une série de rouleaux RS ayant chacun un axe individuel de rotation AS qui sont répartis circonférentiellement autour de l'axe principal AP.

Pour guider et positionner les rouleaux RS, l'ensemble 200S comporte ici une cage 10S de guidage et de positionnement circonférentiel des rouleaux RS, en deux parties complémentaires 10SA et 10SB dont chacune comporte un anneau 12SA, 12SB.

Chaque anneau 12SA, 12SB comporte une série de doigts 14SA, 14SB qui sont répartis circonférentiellement le long de l'anneau 12SA, 12SB.

Chaque anneau, ou secteur d'anneau, 12SA, est réalisé en une seule pièce avec sa série de doigts associés.

A titre non limitatif, chaque anneau 12SA, 12SB est en forme d'une feuille ou plaque annulaire plane.

A titre non limitatif, chaque rouleau RS comporte un trou axial traversant 16S qui débouche aux deux extrémités axiales opposées du rouleau RS.

Chaque doigt 14SA, 14SB est reçu à l'intérieur d'un trou axial 16S d'un rouleau RS associé. Les composants correspondants de l'ensemble 200l sont désignés par les mêmes références alphanumériques indicées « I », soit RI, Al, 10I, 12IA, 12IB, 14IA, 14IB, 16I. Selon un mode de réalisation, chaque anneau 12CA, 12CB, 12SA, 12SB, 12IA, 12IB avec ses doigts 14CA, 14CB, 14SA, 14SB, 14IA, 14IB est réalisé par découpe, notamment par découpe au laser, dans une feuille en métal.

A titre non limitatif, chaque doigt 14CA, 14CB, 14SA, 14SB, 14IA, 14IB présente ici une section rectangulaire.

Il est ainsi possible de produire des cages métalliques à coût réduit par découpe laser à partir d'une feuille d'acier standard de construction. Ensuite, on peut appliquer un revêtement en polyamide (PA) analogue à celui utilisé pour le revêtement des cages de roulement à billes ; par exemple un polyamide PA11 ou PA12 qui peut être déposé par immersion dans un bain fluidisé.

Un tel mode de production est notamment plus économique que la production de cages moulées en matière plastique nécessitant notamment la fabrication d'autant de moules que nécessaire.

En variante, les doigts peuvent être de section circulaire nécessitant la mise en oeuvre d'autres techniques de fabrication, ou d'étapes supplémentaires de fabrication.

A titre non limitatif, selon un mode réalisation, lorsque chaque rouleau RC, RS, RI est un rouleau cylindrique de section sensiblement constante et comporte un trou axial traversant 16C, 16S, 16I (dont chaque extrémité axiale est apte à recevoir un doigt 14CA, 14CB, 14SA, 14SB, 14IA, 14IB), chaque rouleau cylindrique peut être réalisé par découpe d'un tronçon de tube.

Le fait de pouvoir réaliser des trous axiaux 16C, 16S, 16I de grand diamètre permet de réduire de manière importante le poids des rouleaux, qui sont fabriqués à partir d'un matériau coûteux, et de produire ces rouleaux à partir de tubes plutôt que de barres pleines pour réduire le poids et les coûts.

Le diamètre maximal du trou est défini en fonction de la capacité minimale de charge du rouleau.

Lorsque, notamment en raison du niveau de charge souhaité ou d'un diamètre extérieur réduit du rouleau, la conception d'un rouleau avec un trou axial traversant n'est pas possible, les autres avantages de la conception innovante de la cage restent applicables en faisant par exemple appel à un rouleau qui comporte un trou axial borgne à chacune de ses deux extrémités axiales opposées qui est apte à recevoir un doigt associé.

Le coût réduit et le poids réduit ne sont pas les seuls avantages de cette conception car elle est également plus fiable que les cages classiques en matière plastique à fenêtres actuellement utilisées.

En effet, des cages en acier sont beaucoup plus solides et moins fragiles que les cages en matière plastique.

Pour l'assemblage et le montage de chaque ensemble de cage à rouleaux, on procède par exemple de la manière suivante.

En considérant les figures 5 à 7, on introduit les doigts 14SA de l'anneau radialement intérieur 10SA à travers les quatre trous axiaux 16S des rouleaux RS, puis on introduit les doigts 14SB de l'anneau radialement extérieur 12SB dans les trous axiaux 16S des rouleaux RS.

Ensuite, on peut mettre l'ensemble 200S « préassemblé » en position à l'intérieur du palier 106 entre les bagues de roulement 108 et 124.

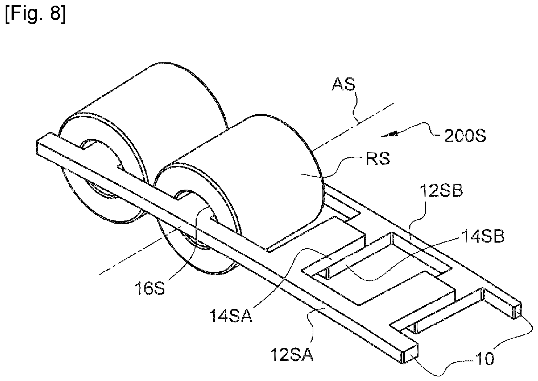

Selon la variante illustrée à la figure 8, les deux anneaux complémentaires 12SA et 12SB peuvent être solidaires l'un de l'autre.

A cet effet, à titre d'exemple, les tronçons d'extrémité libre de deux doigts alignés et opposés 14SA et 14SB reçus à l'intérieur d'un même rouleau RS se chevauchent axialement et sont fixés l'un à l'autre.

Au sens de l'invention, chaque ensemble de cage à rouleaux peut être réalisé sous la forme d'un ensemble annulaire complet s'étendant sur 360°, ou bien sous la forme d'un segment de cage à rouleaux s'étendant sur un arc de cercle, plusieurs segments pouvant être associés le long d'une circonférence.

En fonction des applications, un ensemble de cage à rouleaux, complet ou segmentaire, peut ne comporter qu'un seul anneau ou un seul segment d'anneau avec ses doigts qui sont reçus dans la série de rouleaux associés.

Il est aussi possible de laisser des doigts sans rouleau, le nombre de rouleaux équipant une cage pouvant notamment être déterminé en fonction des charges à encaisser.

Un ensemble selon l'invention peut ne comporter qu'une seule cage latérale de guidage des rouleaux (En une seule pièce ou en plusieurs segments) agencée d'un seul côté des rouleaux. Dans un tel cas, une seule extrémité percée de chaque rouleau est suffisante.

Au sens de l'invention, chaque rouleau cylindrique peut présenter un profil approchant de celui d'un cylindre à génératrice rectiligne (Tel qu'illustré aux figures) et présenter notamment un profil en tonneau ou en bombé.

L'invention trouve aussi à s'appliquer à des ensembles comportant des rouleaux coniques ou tronconiques.

Chaque rouleau peut aussi être réalisé à partir d'un tronçon d'une barre pleine. Dans cette hypothèse, le ou les trous d'extrémité peuvent être réalisés par perçage.

Les rouleaux d'une série peuvent rouler sur la surface d'une piste associée ou être reçus dans une gorge creusée dans cette surface.

Chaque bague de roulement peut être réalisée en une ou plusieurs parties.

L'invention trouve aussi à s'appliquer à un palier ne comportant par exemple que deux ensembles opposés analogues aux ensembles 200S et 200I décrits précédemment qui sont reçus entre des pistes annulaires opposées de roulement tronconiques formant chacune un angle par rapport à l'axe principal de rotation.

L'invention trouve à s'appliquer à la conception de tous types de roulement ou de palier, y compris pour un guidage linéaire en déplacement apte à être interposé entre deux éléments d'une structure qui sont montés mobiles l'un par rapport à l'autre, ce palier comportant un premier élément de roulement, réalisé en une ou plusieurs parties, un second élément de roulement, réalisé en une ou plusieurs parties , s'étendant parallèlement au premier élément de roulement, et au moins un ensemble pour le guidage du premier élément de roulement par rapport au second élément de roulement réalisé selon le principe de l'invention et dans lequel et une cage de guidage et de positionnement circonférentiel des rouleaux autour dudit axe principal, dans lequel la cage comporte au moins un segment rectiligne qui comporte une série de doigts répartis linéairement dont chacun est reçu à l'intérieur d'un trou axial d'un rouleau, chaque segment rectiligne et la série de doigts étant réalisés en une seule pièce.

## Revendications

1. Palier (106) de guidage en rotation, autour d'un axe principal (AP) de rotation, apte à être interposé entre deux éléments (102, 104) d'une structure qui sont montés tournants l'un par rapport à l'autre, ce palier (106) comportant :
- une première bague de roulement (108), radialement intérieure, réalisée en une ou plusieurs parties ;
- une seconde bague de roulement (124) coaxiale, radialement extérieure, réalisée en une ou plusieurs parties, s'étendant autour de la première bague de roulement (108) ;
- et trois ensembles (200C, 200I, 200S) de cage à rouleaux pour le guidage en rotation de la première bague de roulement (108) par rapport à la seconde bague de roulement (124),
**caractérisé :**
- **en ce que** chaque dit ensemble (200C, 200I, 200S) comporte :
- - une série de rouleaux (RC, RS, RI) ayant chacun un axe individuel de rotation (AC, AS, AI) et qui sont répartis circonférentiellement autour dudit axe principal (AP) ;
- - et une cage (10C, 10S, 10I) de guidage et de positionnement circonférentiel des rouleaux (RC, RS, RI) autour dudit axe principal (AP),
- et en ce que ladite cage (10C, 10S, 10I) de chaque dit ensemble comporte au moins un anneau ou segment d'anneau (12CA, 12CB, 12SA, 12CB, 12IA, 12IB) :
- - qui comporte une série de doigts (14CA, 14CB, 14SA, 14Sb, 14IA, 14IB) répartis circonférentiellement dont chacun est reçu à l'intérieur d'un trou axial d'un rouleau (RC, RS, RI) associé ;
- - qui, avec la série de doigts associés (14CA, 14CB, 14SA, 14Sb, 14IA, 14IB), sont réalisés en une seule pièce.

2. Palier (106) selon la revendication 1, **caractérisé en ce que** :
- chaque cage (10C, 10S, 10I) comporte deux anneaux ou segments d'anneaux (12CA, 12CB, 12SA, 12CB, 12IA, 12IB) complémentaires dont chacun comporte une série de doigts (14CA, 14CB, 14SA, 14Sb, 14IA, 14IB), réalisés en une seule pièce avec l'anneau ou segment d'anneau (12CA, 12CB, 12SA, 12CB, 12IA, 12IB), qui sont répartis circonférentiellement et dont chacun est reçu à l'intérieur d'un trou axial (16) d'un rouleau (RC, RS, RI) associé (RC, RS, RI) ; et
- chaque rouleau (RC, RS, RI), à chacune de ses deux extrémités axiales opposées, comporte un trou (16C, 16S, 16I) axial qui reçoit un doigt (14C, 14S, 141) d'un des deux anneaux ou segments d'anneaux (12CA, 12CB, 12SA, 12CB, 12IA, 12IB) complémentaires.

3. Palier (106) selon l'une des revendication 1 ou 2, **caractérisé :**
- **en ce qu'**il comporte deux ensembles (200I, 200S) de cage à rouleaux pour le guidage en rotation de la première bague de roulement (108) par rapport à la seconde bague de roulement (124) ;
- et **en ce que**, pour chacun desdits deux ensembles (200I, 200S), l'axe individuel (AS, AI) de rotation de chaque rouleau (RS, RI) est orthogonal audit axe principal (AP) de rotation.

4. Palier (106) selon l'une des revendication 1 ou 2, **caractérisé en ce qu'**il comporte un ensemble (200C) de cage à rouleaux pour le guidage en rotation de la première bague de roulement (108) par rapport à la seconde bague de roulement (124) dont l'axe individuel (AC) de rotation de chaque rouleau (RC) est parallèle audit axe principal (AP) de rotation.

5. Palier (106) selon la revendication 4 prise en combinaison avec la revendication 3, **caractérisé en ce que** :
- lesdits deux ensembles (200S, 200I) comportent un ensemble supérieur (200S) de cage à rouleaux qui est interposé axialement entre des pistes annulaires planes et parallèles (122 et 132) de roulement et un ensemble inférieur (200I) de cage à rouleaux est interposé axialement ente des pistes annulaires et parallèles (123 et 133) ;
- ledit un ensemble (200C) de cage à rouleaux est un ensemble central (200C) de cage à rouleaux qui est interposé radialement entre des pistes cylindriques et parallèles de roulement (118 et 130).

6. Palier (106) selon l'une quelconque des revendications précédentes, **caractérisé en ce que** chaque anneau ou segment d'anneau (12CA, 12CB, 12SA, 12CB, 12IA, 12IB) avec ses doigts associés (14CA, 14CB, 14SA, 14Sb, 14IA, 14IB) est en forme d'une feuille, plane ou cintrée.

7. Palier (106) selon la revendication précédente, **caractérisé en ce que** chaque anneau ou segment d'anneau (12CA, 12CB, 12SA, 12CB, 12IA, 12IB) avec ses doigts associés (14CA, 14CB, 14SA, 14Sb, 14IA, 14IB) est réalisé par découpe, notamment par découpe au laser, dans une feuille en métal.

8. Palier (106) selon l'une quelconque des revendications précédentes, **caractérisé en ce que**, à au moins une de ses deux extrémités opposées, chaque rouleau (RC, RS, RI) comporte un trou (16C, 16S, 16I) axial borgne qui est apte à recevoir un doigt.

9. Palier (106) (200C, 200I, 200S) selon l'une quelconque des revendications 1 à 8, **caractérisé en ce que** chaque rouleau (RC, RS, RI) comporte un trou (16C, 16S, 16I) axial traversant dont chaque extrémité axiale est apte à recevoir un doigt.

10. Palier (106) selon la revendication 9, **caractérisé en ce que** chaque rouleau (RC, RS, RI) est réalisé par découpe d'un tronçon de tube.

11. Palier (106) selon la revendication 9, **caractérisé en ce que** les deux anneaux ou segments d'anneaux (12CA, 12CB, 12SA, 12CB, 12IA, 12IB) complémentaires de la cage (10C, 10S, 10I) sont solidaires l'un de l'autre.

12. Palier (106) selon la revendication 9, **caractérisé en ce que** les deux anneaux ou segments d'anneaux (12CA, 12CB, 12SA, 12CB, 12IA, 12IB) de la cage (10C, 10S, 10I) sont indépendants l'un de l'autre.

13. Palier (106) selon la revendication 9, **caractérisé en ce que** les tronçons d'extrémité libre de deux doigts (14CA, 14CB, 14SA, 14Sb, 14IA, 14IB) alignés et opposés reçus à l'intérieur d'un même rouleau (RC, RS, RI) se chevauchent axialement.

14. Palier (106) selon l'une quelconque des revendications précédentes, **caractérisé en ce que** chaque cage (10C, 10S, 10I) s'étend selon un secteur angulaire déterminé et/ou est constituée de plusieurs secteurs angulaires indépendants.

15. Palier (106) selon l'une des revendications 3 ou 5, **caractérisé en ce que** :
- l'une (108) des deux bagues de roulement comporte un logement (116) ouvert radialement par rapport à l'axe principal (AP) de rotation ;
- l'autre(124) des deux bagues de roulement comporte une partie (128) en saillie qui s'étend radialement à l'intérieur dudit logement (116),
et en ce chacun desdits deux ensembles (200I, 200S) pour le guidage en rotation de la première bague de roulement (108) par rapport à la seconde bague de roulement (124) est interposé axialement entre deux pistes annulaires opposées de roulement (132-133, 122-123) appartenant respectivement à ladite partie en saillie (128) et audit logement (116).

16. Palier (106) selon la revendication précédente, **caractérisé en ce que** ladite partie en saillie s'étend radialement à l'opposé de l'axe principal de rotation à partir de la première bague de roulement (108) radialement intérieure.

17. Palier (106) selon la revendication 15, **caractérisé en ce que** ladite partie en saillie (128) s'étend radialement vers l'axe principal de rotation (AP) à partir de la seconde bague de roulement (124) radialement extérieure.
